# DEMANDE DE BREVET EUROPEEN

(11) **EP 2 386 334 A1**
(43) Date de publication de la demande: **16.11.2011**
(21) Numéro de dépôt: 11165937.1
(22) Date de dépôt: 12.05.2011
(51) Int. Cl.: A63F 13/06

(54) **Contrôleur de jeu à colonne de direction**

(30) Priorité: 12.05.2010 FR 1053757
(71) Demandeur: Guillemot Corporation, 35135 Chantepie (FR)
(72) Inventeur: Jaouen, Jean-Yves, 56350, SAINT JEAN DE LA POTERIE (FR); Pennaneac'h, Patrick, 35220, CHATEAUBOURG (FR); Raulet, Gilles, 56000, VANNES (FR)
(74) Mandataire: Bioret, Ludovic

(57) **Abrégé**

L'invention a pour objet un contrôleur de jeu vidéo (1) présentant un actionneur (2) mobile en rotation par rapport à un bâti (3) simulant un contrôle de la rotation d'une colonne de direction d'un véhicule simulé.

Selon l'invention, ledit actionneur (2) est monté mobile en translation par rapport audit bâti fixe (3), sur une plage de déplacement prédéterminée, à l'aide d'un assemblage de deux pièces de coulissement (4, 5) coulissant l'une par rapport à l'autre, une desdites pièces de coulissement (4, 5) étant solidaire dudit actionneur (2) et l'autre dudit bâti fixe (3), une première desdites pièces de coulissement (4) comprenant au moins une fente (F) accessible par une ouverture (41) dans laquelle se déplace, selon un axe distinct de l'axe de déplacement en rotation dudit actionneur (2), une portion pénétrante (51) de la seconde desdites pièces de coulissement (5), le déplacement en translation dudit actionneur (2) étant généré par des moyens électromagnétiques commandés par un signal électrique, la première desdites pièces de coulissement comprenant un bobinage et la seconde desdites pièces de coulissement comprenant un aimant.

## Description

### 1. Domaine de l'invention

Le domaine de l'invention est celui des matériels et accessoires de loisirs interactifs pour micro-ordinateurs et consoles de jeux. Plus précisément, l'invention concerne un contrôleur de jeu comprenant un élément mobile en rotation solidaire d'une colonne de direction portée par un bâti. Il peut par exemple s'agir d'un volant, d'un guidon, ou de tout autre élément pouvant être utilisé dans un jeu de simulation, notamment pour contrôler les déplacements d'un véhicule. Certains jeux vidéo mettent en effet en oeuvre un véhicule simulé qui évolue dans un environnement simulé. La reproduction du véhicule simulé peut être une reproduction fidèle d'un véhicule réel, mais elle peut également n'être qu'inspirée d'un véhicule réel, ou être sans lien avec la réalité.

### 2. Solution de l'art antérieur

Il est connu d'utiliser, pour contrôler les jeux vidéo, différents types d'interfaces, notamment sous la forme de volant ou guidon directionnel, en fonction des applications et des besoins, et généralement dans le but de se rapprocher le plus possible de la réalité. Ainsi pour un jeu vidéo simulant la conduite d'un véhicule, l'utilisation d'un actionneur correspondant dans sa forme et dans son utilisation au type de véhicule piloté rend la simulation plus réaliste, par exemple, l'utilisation d'un volant ayant la forme et les fonctions du volant d'une voiture grand tourisme pour un jeu de course de voitures grand tourisme.

De façon classique, les contrôleurs de jeu vidéo à colonne de direction comprennent au moins une partie préhensible (volant ou guidon, par exemple) monté pivotant autour d'un axe par rapport à un bâti permettant à l'utilisateur de faire varier la trajectoire du véhicule simulé.

Dans certains contrôleurs, la rotation de la colonne de direction est dynamisée par un système d'effets de couple et de vibration(s) au moyen, par exemple, d'un ou plusieurs moteurs électriques rotatifs agissant sur la colonne de direction par l'intermédiaire d'un système d'engrenages et/ou de courroie crantée. Un tel système permet de créer des vibrations dans le volant et/ou un couple appliqué à l'actionneur qui peuvent varier en amplitude selon qu'il s'agisse d'un choc, d'un passage sur un vibreur, d'une surface particulière sur laquelle le véhicule se déplace.

Un tel contrôleur de jeu vidéo peut non seulement transformer les mouvements appliqués sur la partie préhensible (volant) par l'utilisateur en données numériques qui sont transmises au logiciel, mais peut en outre convertir des paramètres mécaniques provenant du logiciel en forces appliquées au volant qui sont ressenties par l'utilisateur.

Un inconvénient d'un tel contrôleur de jeu vidéo est que la restitution par le volant des paramètres mécaniques provenant du logiciel est encore trop peu réaliste, et n'est donc pas satisfaisante.

### 3. Objectifs de l'invention

L'invention a notamment pour objectif de pallier ces inconvénients de l'art antérieur.

Plus précisément, l'invention a pour objectif de fournir un contrôleur de jeu vidéo à colonne de direction augmentant le réalisme du jeu, et donc la précision et l'adaptation à un jeu donné, notamment pour les simulations de conduite de véhicules.

Un objet de l'invention est en particulier de proposer un contrôleur de jeu vidéo à colonne de direction offrant des effets réalistes de suspension, d'accélération et de décélération.

Un autre objectif de l'invention est de fournir, selon au moins un mode de réalisation, un contrôleur de jeu vidéo à colonne de direction qui permette à son utilisateur d'améliorer sa condition physique de façon ludique en produisant des efforts correspondants à la pratique d'un sport mécanique (course automobile, par exemple) ou de certains sports nautiques (course de scooter des mers, par exemple).

Un autre objectif de l'invention est de fournir, selon au moins un mode de réalisation, un contrôleur de jeu vidéo à colonne de direction doté d'une grande longévité et d'une bonne résistance aux efforts exercés par l'utilisateur.

Un autre objectif de l'invention est de fournir, selon au moins un mode de réalisation, un contrôleur de jeu vidéo à colonne de direction qui soit silencieux et ne générant pas de vibration parasite (qui nuirait au réalisme).

L'invention a également pour objectif, selon au moins un mode de réalisation, de fournir un contrôleur de jeu vidéo à colonne de direction qui soit simple (comportant peu de pièces) et facile à assembler.

L'invention a également pour objectif, selon au moins un mode de réalisation, de fournir un contrôleur de jeu vidéo à colonne de direction qui soit facile à transporter et dont la maintenance (service après-vente) soit facilité.

### 4. Exposé de l'invention

Ces objectifs, ainsi que d'autres qui apparaîtront par la suite, sont atteints à l'aide d'un contrôleur de jeu vidéo présentant un actionneur mobile en rotation par rapport à un bâti, de façon à simuler un contrôle de la rotation d'une colonne de direction d'un véhicule simulé.

En d'autres termes, il s'agit d'un contrôleur de jeux vidéo qui simule les organes de direction d'un véhicule simulé disposant d'une colonne de direction. Ce contrôleur, capable de générer des signaux de sortie, comprend un bâti et un actionneur qui simule la partie préhensible de ces organes de direction et qui coopère avec une colonne de direction qui est mobile en rotation par rapport au bâti qui est fixe (en ce sens qu'il constitue un référentiel du contrôleur de jeu). Il est à noter que le bâti du contrôleur de jeu vidéo peut reposer ou être fixé sur ou à un support, tel qu'une table ou une structure évoquant, par exemple, un cockpit.

Selon un premier mode de réalisation de l'invention, sans asservissement, ledit actionneur est monté mobile en translation par rapport audit bâti fixe, sur une plage de déplacement prédéterminée, entre deux positions extrêmes, à l'aide d'un assemblage d'au moins deux pièces de coulissement coulissant l'une par rapport à l'autre ou les unes par rapport aux autres, une desdites pièces de coulissement étant solidaire dudit actionneur et une autre desdites pièces de coulissement étant solidaire dudit bâti fixe, une première desdites pièces de coulissement comprenant au moins une fente accessible par au moins une ouverture dans laquelle peut se déplacer selon au moins un axe distinct de l'axe de déplacement en rotation dudit actionneur au moins une portion pénétrante de la seconde desdites pièces de coulissement, le déplacement en translation dudit actionneur étant généré par des moyens électromagnétiques commandés par au moins un signal électrique dont les caractéristiques sont fonction d'une commande reçue (ladite commande peut être, par exemple, une consigne de déplacement de type rampe ou sinus, ou une consigne de type maintien en position neutre), la première desdites pièces de coulissement comprenant au moins un bobinage parcouru par ledit signal électrique ou au moins un aimant et la seconde desdites pièces de coulissement comprenant au moins un aimant ou au moins un bobinage respectivement.

Selon un mode de réalisation particulier, une desdites pièces de coulissement comprend au moins deux bobinages.

Des moyens de traitement, sous la forme d'un microprocesseur contrôlent ledit signal électrique et commandent ainsi le sens et la vitesse dudit déplacement ainsi que l'amplitude ou distance du déplacement (sous réserve que deux bobinages au moins soient mis en oeuvre par la seconde pièce de coulissement).

Selon une variante, ladite fente est accessible par au moins deux ouvertures.

Ceci permet d'optimiser le coulissement des pièces de coulissement.

Dans un mode de réalisation particulier, le déplacement en translation dudit actionneur est effectué suivant un axe distinct de l'axe de rotation dudit actionneur.

Dans une variante de réalisation, ledit actionneur est monté mobile en translation par rapport audit bâti selon au moins deux directions.

Pour ce faire, on met en oeuvre au moins deux moteurs linéaires pour avoir deux dynamisations selon des directions différentes.

Avantageusement, une desdites pièces de coulissement comprend au moins un aimant disposé de façon symétrique par rapport à l'axe longitudinal (direction de l'axe Y) et à l'axe transversal (direction de l'axe X) de cette pièce de coulissement.

Cette mise en oeuvre particulière permet l'autocentrage du plateau par rapport au socle sans courant électrique.

Dans une variante, le contrôleur comprend des moyens de déplacement en rotation dudit actionneur par rapport audit bâti de façon à simuler/ restituer au moins un effet de couple ou un effet de vibration(s).

De nombreux effets de retour de force (« force feedback » en anglais) sont possibles, par exemple : inertie, ressort, blocage, accélération, mouvement brusque (choc), etc.

Différents effets de vibration(s) sont également possibles, ils peuvent notamment différer en fonction de leurs amplitudes, durées, et périodes.

Le programmeur du logiciel de jeu choisit le ou les effets de retour de force à appliquer en fonction du scénario du jeu (par exemple : le scénario prévoit un tremblement de terre, des nids de poule dans le revêtement d'une route, etc) et des actions du joueur sur le jeu (par exemple, le joueur a précipité le véhicule simulé contre un arbre ou n'a pas réussi à éviter un obstacle).

Le jeu requiert l'exécution du ou des effets de retour de force et/ou des effets de vibration(s) choisis par le programmeur pour un tel cas de figure parmi une librairie d'effets de retour de force et de vibrations (par exemple, un effet nécessitant mécaniquement un déplacement rapide de l'une des pièces de coulissement dans une direction, puis un déplacement un peu moins rapide dans une direction inverse, puis des mouvements reproduisant des vibrations et enfin l'immobilité de cette pièce de coulissement.

Le microprocesseur traduit les effets désirés par le programmeur en un ou plusieurs signaux électriques ayant des caractéristiques spécifiques (par exemple, s'agissant de la forme du signal: sinus, rampe, ou carré). Les moyens électromagnétiques génèrent et contrôlent (« contrôler » est ici utilisé au sens de « commander », pas au sens de « vérifier ») le déplacement en translation de l'une des pièces de coulissement par rapport à l'autre pièce de coulissement. Ce contrôle dudit déplacement en translation comprend le sens du déplacement, l'amplitude du déplacement (la course) et la vitesse de déplacement.

Dans un mode réalisation particulier, les moyens de déplacement en rotation comprennent un moteur électrique rotatif agissant sur l'actionneur par l'intermédiaire d'un système d'engrenages et/ou de courroie crantée.

Dans une alternative, on met en oeuvre un moteur dit en « brushless » qui est en prise directe sur la colonne de direction (c'est-à-dire sans système d'engrenage).

Selon un aspect particulier, ledit actionneur est détachable dudit bâti.

Selon un mode de réalisation particulier, l'actionneur appartient au groupe comprenant :
- les volants ;
- les guidons ;
- les barres à roue de bateau ;
- les manches d'avion (en anglais « yokes »).

Avantageusement, ledit contrôleur comprend un capteur de déplacement pour mesurer ledit déplacement en translation réel et fournir les données représentatives de ce déplacement à des moyens de traitement.

Selon un second mode de réalisation, préférentiel, de l'invention, en plus de ce qui est décrit ci-avant pour le premier mode de réalisation, l'invention comprend un capteur qui est, par exemple, une résistance linéaire variable ou un capteur magnétique mesurant la position d'un aimant. Ledit capteur fournit en temps réel les données qui permettent audit microprocesseur de contrôler en temps réel ledit déplacement en translation, en déterminant en temps réel le déplacement réel (la position réelle est mesurée directement mais il est également possible de déterminer le sens, l'accélération et la vitesse réelle du déplacement).

Il est ainsi possible de tenir compte des conséquences provoquées par les efforts exercés par le joueur sur l'actionneur (et donc sur la colonne de direction et sur la pièce de coulissement qui en est solidaire) et d'ajuster si nécessaire le signal électrique.

Par exemple, si l'effet de retour de force est une immobilité (c'est-à-dire une absence de mouvement de translation desdits actionneur, colonne de direction et pièce de coulissement), le joueur est susceptible de lutter contre cette immobilité, dès lors, sans asservissement, la colonne de direction est susceptible de se déplacer sous l'action des efforts exercés par le joueur malgré le ou les signaux électriques utilisés.

Dans cet exemple, si le capteur mesure un changement de position alors que le microprocesseur exécute une consigne « immobilité », alors le microprocesseur peut ajuster en temps réel chaque signal électrique pour contrer les efforts du joueur (par exemple, en augmentant la tension électrique).

Le contrôle du déplacement en translation comprend donc ici la commande de l'amplitude du déplacement (y compris une distance de déplacement nulle), de son sens, de l'accélération et de la vitesse de déplacement, par au moins un signal électrique dont les caractéristiques permettent théoriquement d'obtenir ces paramètres de déplacement, la vérification de l'exécution réelle de ces paramètres et l'ajustement du déplacement si nécessaire. Dans ce mode de réalisation préférentiel, le déplacement est donc asservi.

En d'autres termes, il y a deux façons de mettre en oeuvre l'invention :
- la première, sans asservissement, dans laquelle on contrôle le déplacement en boucle ouverte, sans connaître le déplacement réel donc sans tenir compte si l'utilisateur exerce ou non des efforts très importants qui affectent le déplacement (par exemple, la position ou la vitesse).
- la seconde, avec asservissement, dans laquelle on mesure le déplacement réel en temps réel pour ajuster si nécessaire le signal électrique (y compris, par exemple, la tension).

Le contrôle du déplacement en translation peut être assuré par un moteur électrique linéaire, ce dernier devant alors être conforme aux caractéristiques décrites précédemment, c'est-à-dire aux caractéristiques desdites pièces de coulissement, bobinage(s) et aimant(s).

Ledit moteur électrique linéaire comporte alors des moyens électromagnétiques et au moins deux pièces de coulissement, et, lesdits moyens électromagnétiques peuvent générer le déplacement en translation de l'une au moins de ces pièces de coulissement.

Préférentiellement, ledit corps de guidage est solidaire dudit actionneur et ledit plateau de guidage est solidaire dudit bâti. Toutefois, cela peut être inversé : le corps de guidage peut être solidaire dudit bâti et dans ce cas ledit plateau de guidage est alors solidaire dudit actionneur.

La colonne de direction peut être horizontale mais préférentiellement la colonne de direction est inclinée par rapport à l'horizontale (l'actionneur est ainsi relevé par rapport à une position horizontale de la colonne). L'inclinaison de la colonne de direction permet de procurer des effets de retour de force plus variés et de préserver la simplicité du contrôleur de jeu vidéo et de limiter son coût.

Dans un autre mode de réalisation, la colonne de direction peut être horizontale mais mobile et guidée en translation par rapport au bâti selon une direction inclinée par rapport à l'horizontale.

Préférentiellement, le contrôleur de jeu vidéo met également en oeuvre des moyens de déplacement en rotation, dits moyens d'effets de couple et de vibration(s), dudit actionneur par rapport audit bâti de façon à simuler/ restituer un effet de couple (effort en rotation) et/ou un effet de vibration(s).

Ainsi, la colonne de direction est dynamisée :
- en translation par un système de retour de force et/ou de vibration(s) au moyen, par exemple, d'un dispositif électromagnétique agissant sur la colonne de direction par l'intermédiaire d'un assemblage de deux pièces de coulissement, dont un socle mobile en translation sur lequel est monté mobile en rotation ladite colonne, le déplacement en translation du socle étant contrôlé par les moyens électromagnétiques ; et, dans au moins un mode de réalisation,
- en rotation par un système d'effets de couple et de vibration(s) au moyen, par exemple, d'un moteur électrique rotatif agissant sur la colonne de direction par l'intermédiaire d'un système d'engrenages et/ou de courroie crantée.

Un tel contrôleur de jeu vidéo peut ainsi convertir des paramètres mécaniques provenant du logiciel en forces appliquées à la colonne de direction, et donc à l'actionneur, selon au moins deux axes.

Ainsi, en plus du système classique d'effets de couple et de vibration(s) appliqué sur la rotation de la colonne (et donc du volant ou du guidon), on met en oeuvre simultanément au moins un retour de force appliqué sur la translation de la colonne par des moyens électromagnétiques de façon à simuler, notamment, des effets d'accélération ou de décélération et un effet de suspension.

En d'autres termes, le contrôleur de l'invention actionne la colonne de direction en rotation et en translation offrant ainsi un ressenti réaliste à l'utilisateur.

La commande des moyens d'actionnement en rotation et en translation de la colonne de direction est effectué par :
- le logiciel embarqué (« firmware » en anglais) en fonction des actions du joueur sur le contrôleur de jeu (sur ses leviers, manettes, palettes, boutons, etc.) et sur ses accessoires éventuels (pédalier comportant une ou plusieurs pédales, boîte de vitesses séparée du contrôleur de jeu, etc.), notamment en fonction des courbes de réponse mesurées sur les pédales (accélération, freinage et/ou embrayage) et/ou sur le passage des vitesses au volant ou sur la boîte de vitesses séparée du volant ;
- le logiciel de jeu (« software » en anglais) qui, par l'intégration d'une librairie d'effet sur les moyens d'actionnement respectifs commande les effets désirés en fonction des données contextuelles du jeu ; et
- les moyens de traitement.

Le contrôleur de l'invention met en oeuvre un étage de puissance qui est en liaison avec les moyens de traitement et qui est capable de distribuer la puissance alimentant et pilotant les moyens d'actionnement en rotation et en translation de la colonne de direction. Cet étage de puissance peut être intégré dans l'électronique globale qui asservit les moteurs, les axes, les boutons des volants, pédales et la boîte de vitesses éventuellement.

Le contrôleur de l'invention procure notamment à l'utilisateur des sensations réalistes de suspension par des mouvements dynamiques de la colonne de direction sur une course courte. Un tel effet de suspension était obtenu, dans l'art antérieur, par la mise en oeuvre d'un cockpit monté sur vérins, une telle solution étant toutefois inadaptée à la simulation grand public à domicile.

Le contrôleur de l'invention procure en outre à l'utilisateur des sensations d'accélération. Par exemple, lors d'une simulation de course de voitures, lorsque le joueur appuie fortement sur la pédale d'accélération, la colonne de direction se déplace selon l'axe A dans la direction opposée à l'utilisateur, qui se retrouve « tiré par le volant ».

Le contrôleur de l'invention procure également à l'utilisateur des sensations de décélération, y compris des sensations de choc.

Le contrôleur de l'invention procure enfin à l'utilisateur des sensations de vibrations.

Le dispositif électromagnétique de l'invention, commandé par les moyens de traitement (selon le logiciel embarqué et le logiciel de jeu), est alimenté par une source de courant classique via l'étage de puissance et permet d'optimiser les consignes provenant du logiciel de jeu (le temps de réaction d'un tel dispositif étant court) comparé par exemple à un dispositif pneumatique qui nécessite notamment une réserve d'air comprimée. Par ailleurs, le rapport force disponible/encombrement d'une telle solution est particulièrement avantageux.

Le dispositif électromagnétique de l'invention présente également l'avantage d'être compact et silencieux.

Le dispositif électromagnétique de l'invention présente également l'avantage d'une bonne puissance et d'une bonne longévité. Etant donné que le joueur va exercer des efforts importants et que le volant se trouve en porte-à-faux par rapport au bâti, un système à dents (engrenages ou crémaillère) serait sujet à une usure prématurée et à un risque de casse (et serait par ailleurs plus bruyant).

La forme des pièces de coulissement assure un bon guidage de ces pièces l'une par rapport à l'autre lorsqu'elles sont assemblées.

En effet, une première des pièces de coulissement comprend une fente accessible par deux ouvertures permettant à la partie pénétrante de la deuxième des pièces de coulissement de traverser la première.

En outre, cet assemblage confère aux pièces de coulissement une robustesse permettant de les utiliser dans différents emplacements pour différentes utilisations qui offrent chacune une dynamisation de la colonne de direction dans au moins une direction par rapport à l'axe A de la colonne de direction, notamment sa direction longitudinale (translation de l'une des pièces de coulissement selon une direction sensiblement parallèle à l'axe A), la direction transversale (translation de l'une des pièces de coulissement selon une direction sensiblement transversale par rapport à l'axe A, pour simuler des effets latéraux), et la direction verticale (translation de l'une des pièces de coulissement selon une direction sensiblement verticale par rapport à l'axe A, pour simuler des effets de dessus ou de dessous).

L'invention présente également l'avantage d'être précise et contrôlable en temps réel. Le dispositif électromagnétique permet en effet un mouvement bidirectionnel (par exemple : en avant ou en arrière), un retour au neutre, et un ajustement dynamique de la vitesse de déplacement de la colonne de direction.

Dans un mode de réalisation particulier, le dispositif électromagnétique comprend au moins deux bobines qui permettent d'ajuster l'amplitude du déplacement de la colonne de direction et de la bloquer à l'équilibre où on veut (il est possible de bloquer en translation la colonne de direction non seulement en position neutre et en position extrême mais également en tout point compris entre les positions extrêmes).

Une seule bobine permet uniquement le passage d'une position extrême à l'autre en inversant le courant dans la bobine. Un dispositif électromagnétique à une seule bobine ne suffit pas pour ajuster efficacement la vitesse du déplacement lors de la translation entre deux positions extrêmes (ou butées). Par conséquent un dispositif électromagnétique à une seule bobine ne permet que des effets limités qui le cantonne à la production d'effets de vibrations ou de chocs.

Il peut y avoir plus de deux bobines mais déterminer et ajuster en temps réel les caractéristiques des signaux électriques correspondant aux effets à produire est alors plus complexe à moins de conserver une symétrie.

En ce qui concerne la translation des pièces de coulissement selon un axe distinct de l'axe de rotation de l'actionneur, la structure du moteur électrique linéaire permet en effet de le rendre indépendant de l'axe de rotation de l'actionneur. Son caractère compact et robuste permet de le positionner à différents endroits en fonction des effets que l'on souhaite offrir à l'utilisateur (on peut par exemple le positionner perpendiculairement à la colonne de direction pour maximiser les effets de suspension alors que si les pièces coulissent selon l'axe de rotation, ce sont les effets d'accélération/décélération qui sont privilégiés).

Dans un mode de réalisation particulier de l'invention, ledit contrôleur comprend au moins un capteur de contrainte pour mesurer les efforts s'exerçant sur ledit actionneur ou sur ladite colonne de direction.

Dans un autre mode de réalisation particulier de l'invention, ladite seconde pièce de coulissement comprend une partie pénétrante dont la largeur est inférieure à la longueur desdites ouvertures de ladite première pièce de coulissement et deux parties situées aux extrémités respectives de la partie dont la largeur est supérieure à la longueur desdites ouvertures.

Dans une mise en oeuvre particulière, ladite seconde pièce de coulissement comprend au moins un prolongement selon une direction perpendiculaire à l'axe longitudinal de la partie pénétrante.

Préférentiellement, ledit au moins un prolongement est mobile par rapport à une ouverture correspondante ménagée dans ladite première pièce de coulissement.

Avantageusement, la première desdites pièces de coulissement comprend deux sous-ensembles assemblés l'un à l'autre.

Préférentiellement, chacun desdits sous-ensembles comprend au moins un bobinage.

Comme mentionné auparavant, cela permet un contrôle bidirectionnel du déplacement. On peut bloquer le déplacement où on veut et les effets ont l'amplitude désirée.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 est une vue en perspective du contrôleur de jeu vidéo, et plus précisément d'un exemple de contrôleur à volant pour le contrôle de jeu vidéo pouvant mettre en oeuvre l'invention ;
- la figure 2 est une vue en perspective de l'intérieur du contrôleur de jeu vidéo selon l'invention ;
- la figure 3 est une vue de côté des moyens de retour de force en translation de l'actionneur du contrôleur de jeu vidéo selon l'invention ;
- la figure 4 est une vue en perspective des moyens de retour de force en translation de l' actionneur du contrôleur de jeu vidéo selon l'invention ;
- la figure 5 est une vue de détail des moyens de retour de force en translation de l'actionneur du contrôleur de jeu vidéo selon l'invention ;
- la figure 6 est une vue en perspective d'une platine du bâti du contrôleur de jeu vidéo selon l'invention ;
- la figure 7 est une vue en perspective d'un mode de réalisation d'un socle de la colonne de direction du contrôleur de jeu vidéo selon l'invention ;
- la figure 8 est une vue en perspective d'un mode de réalisation d'un plateau porte-aimant ;
- les figures 9A et 9B sont des vues en perspective illustrant le déplacement du socle par rapport au plateau porte-aimant selon un mode de réalisation ;
- la figure 10 est une vue en transparence du socle et du plateau porte-aimant selon un autre mode de réalisation ;
- la figure 11 est une vue en perspective du plateau de la figure 10 montrant les aimants ;
- la figure 12 est une vue en perspective d'une partie du socle de la figure 10 montrant la bobine solidaire de cette partie du socle ;
- la figure 13 est une vue en perspective du socle de la figure 10 sans le plateau porte-aimant.

### 6. Description détaillée de l'invention

### 6.1 Principe général

Les contrôleurs de jeu vidéo à colonne de direction comprennent un actionneur qui est généralement un guidon ou un volant permettant à l'utilisateur de faire varier la trajectoire du véhicule simulé.

D'autres types d'actionneurs peuvent bien sûr être envisagés, par exemple pour simuler le contrôle d'un bateau, d'un aéronef, d'un vaisseau spatial, ...

De manière connue, la rotation de la colonne de direction peut être dynamisée par un système d'effet de couple et de vibration(s) qui permet de créer des effets de couple et/ou des effets de vibration(s) autour de l'axe de rotation du contrôleur de jeu vidéo.

Le principe de l'invention consiste à créer de nouveaux axes de retour de force sur les contrôleurs de jeu par au moins une translation de la colonne de direction offrant ainsi de nouveaux effets de retour de force et des simulations plus réalistes.

Les premiers et deuxièmes systèmes de retour de force procurent chacun des effets variés (sensations d'inertie, de blocage, d'amortissement, de choc, de vibration, ...).

Dans le mode de réalisation particulier décrit ci-après, cette translation est effectuée suivant l'axe de la colonne ou suivant un axe proche par le biais d'un assemblage de deux pièces de coulissement coulissant l'une par rapport à l'autre et d'un dispositif électromagnétique simulant ainsi notamment des effets de suspension, d'accélération et/ou de décélération.

### 6.2 Description détaillée d'un mode de réalisation particulier

Dans le mode de réalisation décrit par la suite, l'actionneur est un volant (type volant de voiture de grand tourisme) détachable d'un bâti.

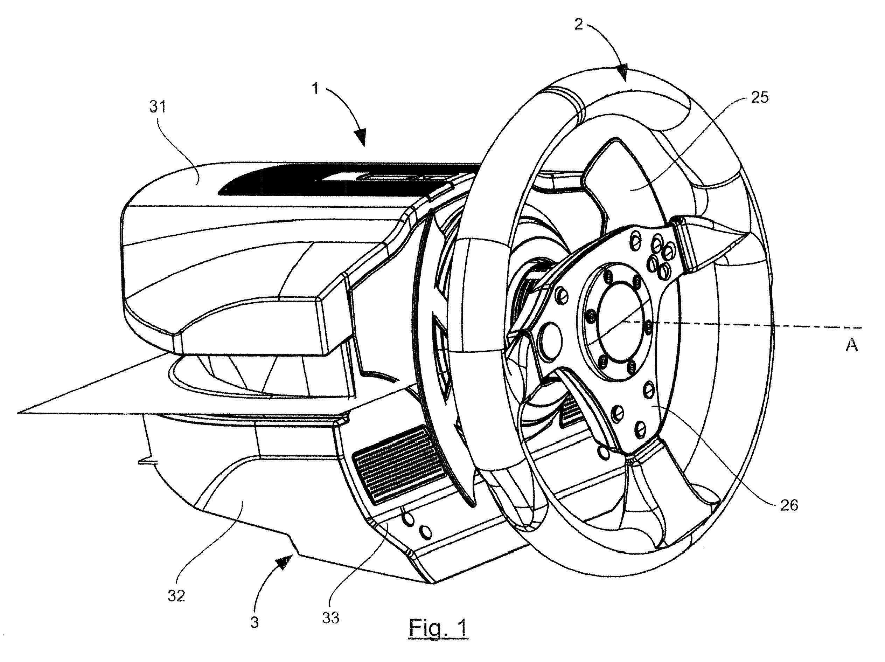

La figure 1 est une vue en perspective d'un exemple de contrôleur de jeu vidéo selon l'invention. Ce contrôleur 1 comprend un actionneur 2, sous la forme d'un volant mobile en rotation par rapport à un bâti 3 selon un axe A de rotation, le bâti 3 pouvant être monté sur un support (non représenté), ce support étant fixe ou non. Ce bâti 3 comprend une coque supérieure 31 assemblée de manière amovible à une coque inférieure 32 et à une face avant 33. La coque inférieure 32 du bâti 3 assure la liaison ou la fixation réversible ou non du contrôleur 1 avec un support tel qu'une table ou un plan de travail ou un cockpit. Le contrôleur de jeu 1 peut être associé à des pédales et, dans le cas où le passage des vitesses ne s'effectue pas au volant, à une boîte de vitesses séparée du volant.

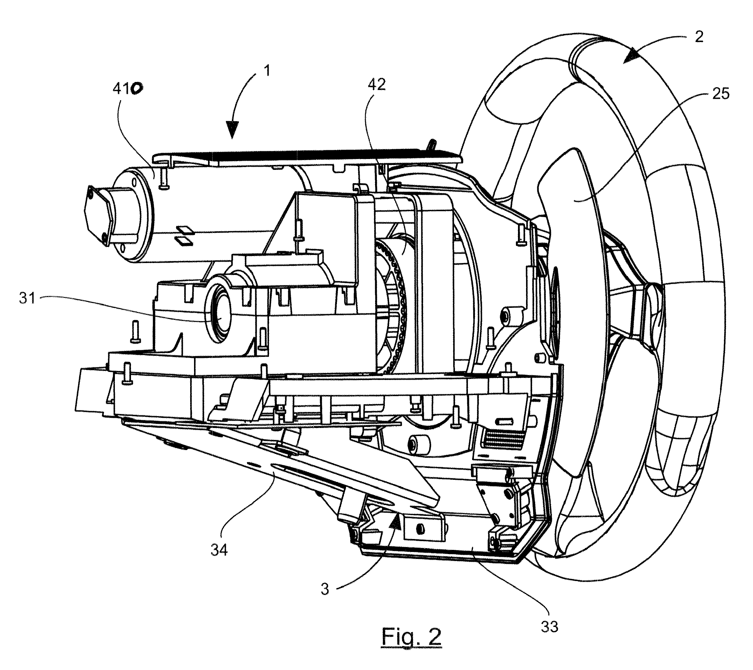

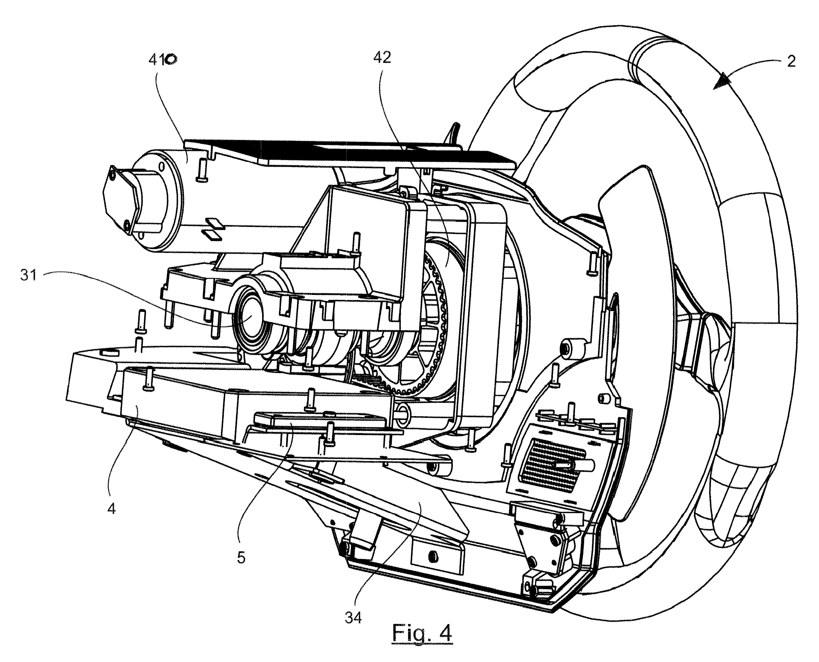

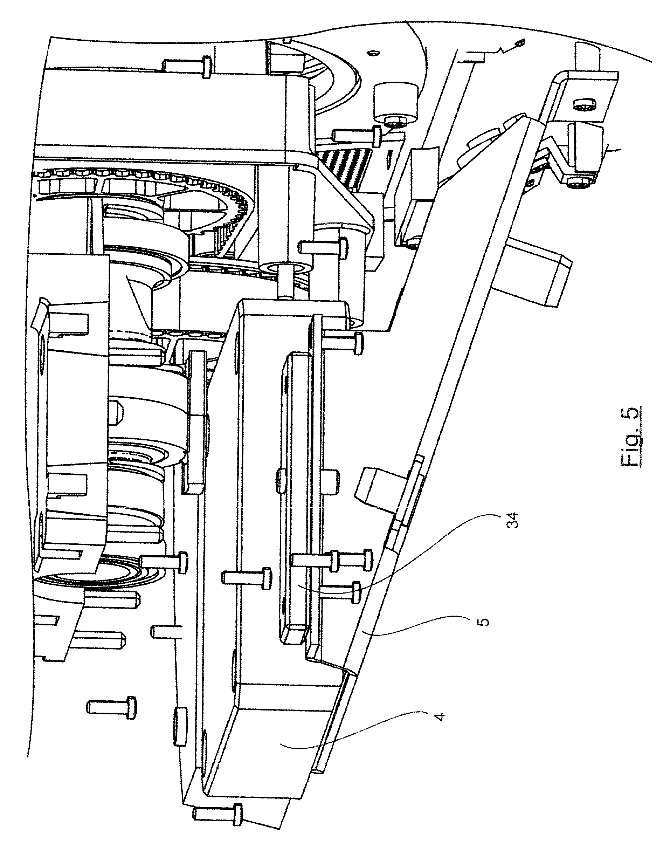

On distingue notamment sur cette figure 1 des boutons 26 et des palettes 25 de commande disposés sur l'actionneur 2. Le contrôleur 1 comporte un système de fixation qui permet de fixer et de verrouiller de façon réversible l'actionneur 2 sur le bâti 3 de façon à permettre la transmission du mouvement de rotation de l'actionneur 2 vers la colonne de direction qui, dans ce mode de réalisation est l'arbre 31 (visible sur les figures 2 à 5). De nombreux moyens de fixation réversibles peuvent bien sûr être mis en oeuvre, sans sortir du champ de l'invention.

Dans un mode de réalisation simplifié, il est également possible de mettre en oeuvre un simple emboîtement à force du volant dans son support.

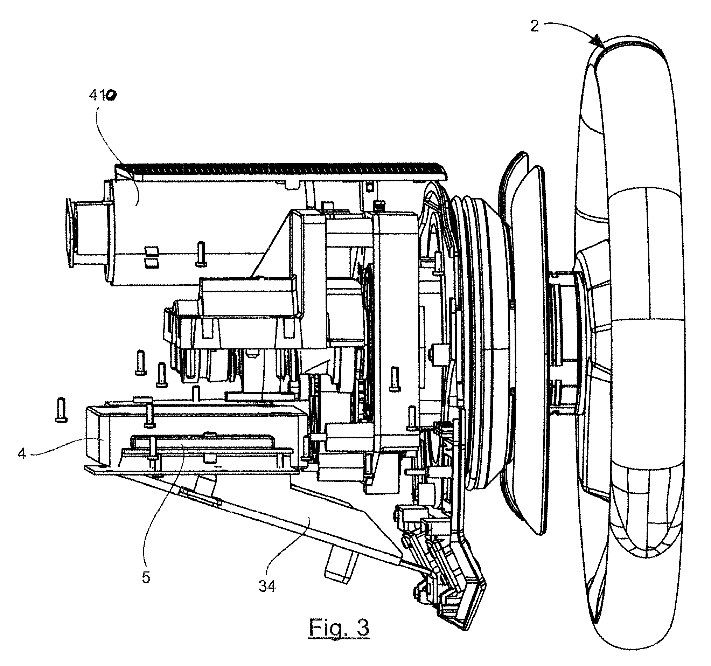

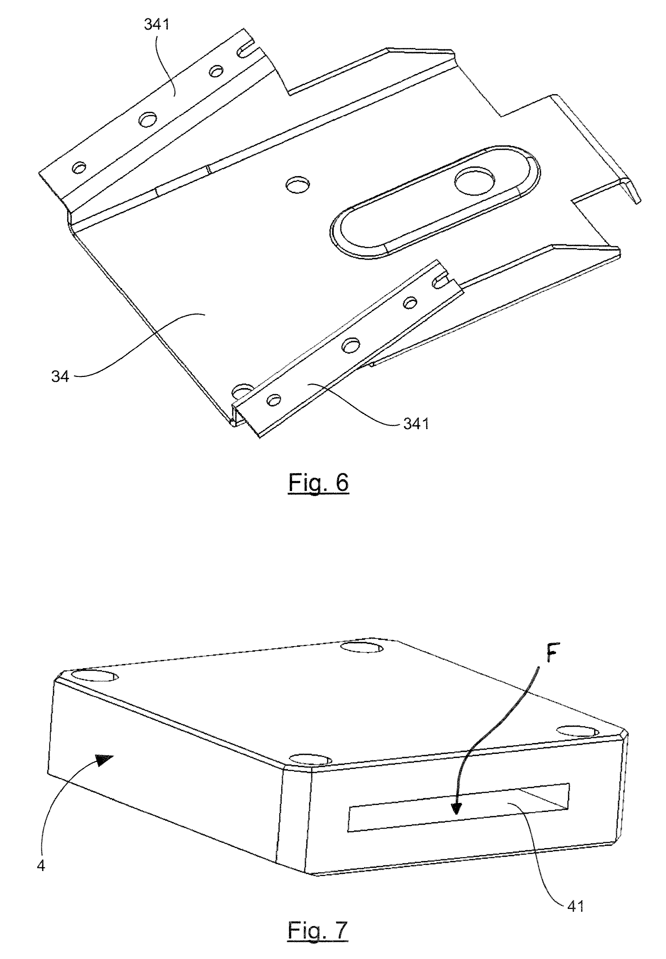

Les figures 2 et 3 illustrent, par une vue en perspective et de côté respectivement, l'intérieur du contrôleur 1 une fois la coque supérieure 31 et la coque inférieure 32 retirées. On distingue sur cette figure le bâti 3 comprenant la face avant 33 à laquelle est reliée de manière fixe une platine 34 (figure 6), l'arbre 31 (qui constitue la colonne de direction du contrôleur 1) auquel est relié l'actionneur 2. L'arbre 31 est formé d'une seule pièce mais il pourrait être formé de plusieurs pièces fixées les unes aux autres. L'arbre 31 (ou colonne de direction 31) est solidaire de l'actionneur 2, et se déplace donc en rotation autour de l'axe A de la même façon que l'actionneur 2.

La rotation de la colonne de direction 31 est dynamisée par un premier système, dit système d'effet de couple et de vibration(s) au moyen, par exemple, d'un moteur électrique 410 rotatif agissant sur la colonne de direction 31 par l'intermédiaire d'un système d'engrenages et/ou de courroie crantée. Dans ce cas, un engrenage 42 de grand diamètre (pour la précision) est fixé de façon coaxiale à la colonne de direction 31. Cet engrenage 42 reçoit mécaniquement (via un train d'engrenages et ou de roues et courroies crantées) les forces exercées par le moteur électrique 410 qui est actionné en fonction des effets de couple ou des effets de vibration(s) implémentés par le jeu vidéo. L'engrenage 42, et donc la colonne de direction 31 et l'actionneur 2, pivote ou stoppe sa rotation autour de l'axe A sous l'action du moteur électrique 410. Par exemple, il peut ramener l'actionneur 2 en position neutre, ou s'opposer à la rotation de la colonne de direction 31, provoquer la rotation de la colonne de direction 31, provoquer des à-coups dans la rotation de la colonne de direction 31, etc.

Selon l'invention, la colonne de direction 31, et donc le volant 2, est dynamisée en translation par un deuxième système, dit système de retour de force.

Pour ce faire, le volant 2 du contrôleur de jeu vidéo 1 est monté mobile en translation par rapport au bâti fixe 3 suivant son axe de rotation A ou suivant un axe proche (et donc distinct) de cet axe A, sur une plage de déplacement prédéterminée, à l'aide d'un assemblage de deux pièces de coulissement coulissant l'une par rapport à l'autre. Le déplacement en translation du volant 2 est contrôlé par un dispositif électromagnétique, qui sera décrit plus en détail par la suite.

Plus précisément, le dispositif électromagnétique commande le déplacement en translation d'un corps de guidage 4 mobile par rapport au bâti 3 et sur lequel sont solidarisés la colonne de direction 31 et le volant 2. Ce corps de guidage 4 coulisse par rapport à un plateau de guidage 5 qui est solidaire du bâti fixe 3.

La colonne de direction n'est pas horizontale mais inclinée par rapport à l'horizontale pour permettre de faire ressentir au joueur des effets de retour de force selon quatre directions (haut, bas, avant, arrière) grâce à seulement un dispositif électromagnétique, un corps de guidage 4 et un plateau de guidage 5.

La colonne de direction présente un angle de dix-huit degrés par rapport à l'horizontale (autrement dit, 18° par rapport à un support plan auquel le contrôleur de jeu vidéo est fixé).

L'inclinaison par rapport à l'horizontale permet de faire ressentir au joueur des effets sensiblement verticaux (haut - bas par rapport à l'utilisateur), notamment un effet de suspension, et cela sans mettre en oeuvre une translation purement verticale de la colonne de direction par rapport à un support plan auquel le contrôleur de jeu vidéo est fixé (donc ici de façon simple et à moindre coût).

Malgré cette inclinaison de dix-huit degrés par rapport à l'horizontale, la direction essentiellement longitudinale de la colonne de direction permet de faire ressentir au joueur des effets sensiblement horizontaux (plus précisément, longitudinaux, donc avant - arrière par rapport à l'utilisateur), notamment des effets d'accélération et de décélération.

Par conséquent, la colonne de direction 31 et le volant 2 sont mobiles en rotation et en translation par rapport au bâti 3, ce qui permet d'offrir un nouvel axe de retour de force et de vibration(s) obtenu en translation en plus de l'axe d'effets de couple et de vibration(s) obtenu en rotation. En ce qui concerne les effets de retour de force sensiblement verticaux et les effets de retour de force sensiblement horizontaux et longitudinaux (dans le mode de réalisation des figures 2 à 5), la simulation est plus naturelle, plus réaliste, que ce que permet un système d'effet de couple et de vibration(s).

La technique de l'invention augmente ainsi le réalisme du jeu.

En effet, une translation de la colonne de direction selon une direction grossièrement longitudinale (avant, arrière par rapport à l'utilisateur) permet au joueur de ressentir notamment les accélérations/décélérations du véhicule simulé. Une translation de la colonne de direction selon une direction inclinée par rapport à l'horizontale permet au joueur de ressentir notamment un effet de suspension. En ce qui concerne le seul effet de suspension, la translation de la colonne de direction selon une direction inclinée par rapport à l'horizontale peut être avantageusement - du point de vue du réalisme- remplacée par une translation de la colonne de direction selon une direction sensiblement orthogonale par rapport au plan du support sur lequel est fixé ou repose la bâti du contrôleur de jeu.

La translation de la colonne de direction selon une direction inclinée par rapport à l'horizontale peut être également être remplacée (mais avec un rendu moins réaliste pour l'utilisateur) par une rotation de la colonne de direction autour d'un axe transversal et orthogonal à l'axe A).

En d'autres termes, une rotation permet également de réaliser un effet de suspension (la première extrémité de la colonne, celle opposée à l'utilisateur, étant en liaison rotule par rapport au bâti et la seconde extrémité étant en liaison glissière verticale par rapport au bâti, et un moteur linéaire levant/abaissant cette seconde extrémité, de sorte que l'actionneur, c'est-à-dire la partie préhensible, se lève ou s'abaisse).

La figure 7 est une vue en perspective du corps de guidage sous la forme d'un socle 4 de forme sensiblement parallélépipédique comprenant une fente (ou logement) accessible par deux ouvertures 41 rectangulaires situées sur deux faces (ou cotés) opposées du socle 4.

Les dimensions du socle 4 peuvent être différentes selon la longueur de la course désirée pour le déplacement en translation. La longueur de la course (donc les dimensions du socle ainsi que le nombre et les caractéristiques du bobinage) est choisie en fonction de l'amplitude maximale des effets que l'on souhaite procurer à l'utilisateur et du nombre d'effets successifs que l'on souhaite pouvoir procurer de façon sensible pour l'utilisateur lors d'un déplacement entre une position neutre et une position extrême. On comprend que plus la course (du socle 4 par rapport au plateau) est courte, plus le nombre de changements de vitesse (de déplacement de l'actionneur) dans un même sens que l'utilisateur pourra percevoir successivement diminue.

Selon une variante de réalisation, on adjoint un dispositif de démultiplication (amplification) de la course des pièces de coulissement consistant par exemple en un ensemble à engrenage(s) et crémaillère(s), ou un système vis et écrou, ou un mécanisme à bielle(s), ou à came(s) et tige(s).

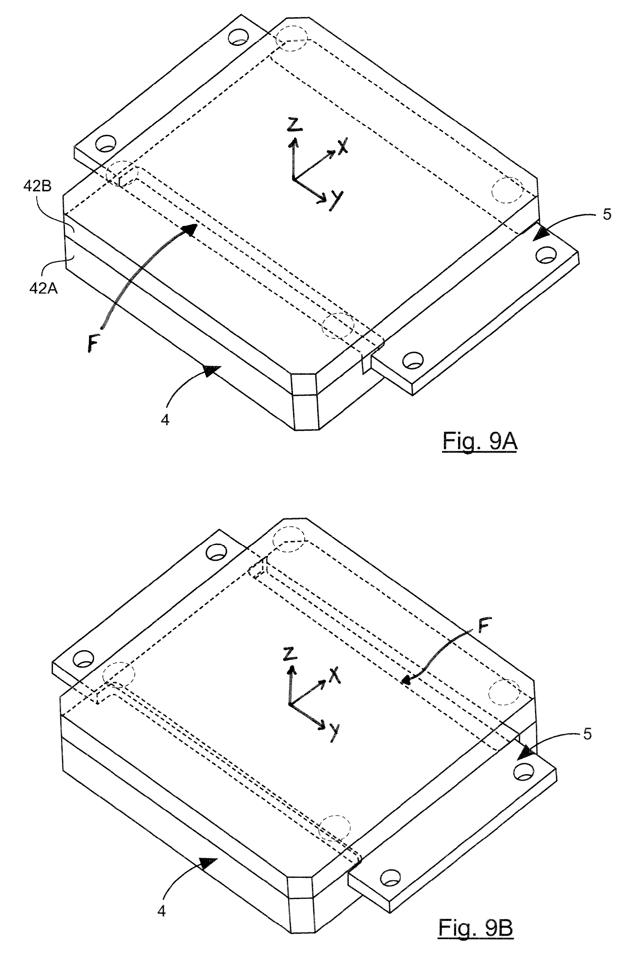

Le socle 4 est formé de deux sous-ensembles 42A, 42B (figure 9A) assemblés par vissage l'un sur l'autre.

Selon d'autres variantes de réalisation, la fente du socle est accessible par plus de deux ouvertures et sa forme correspond à un espace adapté au sein du socle pour recevoir la portion pénétrante du plateau porte-aimant en prévoyant un jeu mécanique, de sorte que le socle puisse se déplacer en translation par rapport au plateau porte-aimant (ou inversement).

L'une des ouvertures supplémentaires peut ainsi se trouver sur une face située dans un plan orthogonal par rapport aux plans dans lesquels sont situées les autres faces, de sorte qu'un prolongement puisse déboucher de chacune de ces ouvertures supplémentaires et procure un point d'appui supplémentaire.

Le plateau porte-aimant pénètre dans le socle selon une direction sensiblement perpendiculaire à l'axe de rotation de la colonne de direction. En effet, le plateau porte-aimant traverse le socle, le coupant perpendiculairement selon la plus grande dimension du plateau (le plateau porte-aimant débouchant de part et d'autre du socle selon la direction y).

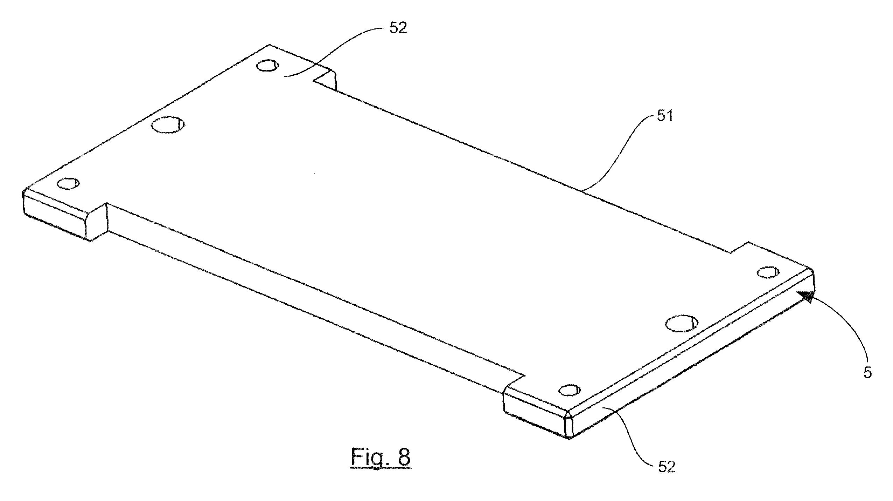

Le plateau de guidage sous la forme d'un plateau porte-aimant 5, illustré en perspective sur la figure 8, porte au moins un aimant (non représenté) et comprend une partie ou portion pénétrante 51 dont la largeur est inférieure à la longueur de l'ouverture 41 du socle 4 et deux parties 52 situées aux extrémités respectives de la partie 51 dont la longueur est supérieure à la longueur de l'ouverture 41 du socle 4. La portion pénétrante 51 du plateau porte-aimant 5 est destinée à être logée dans le logement du socle 4, comme illustré sur les figures 3 à 5. Ce plateau porte-aimant 5 est en outre solidarisé (par vissage) par l'intermédiaire des parties 52 aux pattes 341 de la platine 34.

Le socle 4 comprend au moins un bobinage (non représenté) qui, en fonction du signal électrique le parcourant, provoque le déplacement du socle 4 par rapport au plateau porte-aimant 5, comme illustré sur les figures 9A et 9B. On comprend aisément que le sens et la vitesse de déplacement du socle 4, et donc de la colonne de direction 31, sont fonction du signal électrique parcourant le ou les bobinages.

On comprend également que si il y a plusieurs bobinages, chaque bobinage peut être parcouru par un signal électrique identique ou différent. En mettant en oeuvre deux bobinages dont les caractéristiques sont identiques, un premier signal électrique parcourant le premier bobinage exerce une première force électromagnétique, et un second signal électrique parcourant le second bobinage exerce une seconde force électromagnétique. Cette seconde force électromagnétique peut s'exercer dans la même direction, soit dans un sens opposé au sens de la première force, soit dans le même sens.

En outre, cette seconde force électromagnétique peut être soit moins forte, soit égale, soit plus forte que la première force électromagnétique. On comprend alors qu'en ajustant les caractéristiques du premier et du second signal électrique, il est possible de mettre le socle 4 en équilibre par rapport au plateau porte-aimant 5. Il est possible de les bloquer l'un par rapport à l'autre non seulement aux positions extrêmes (c'est-à-dire en butées) de la plage de déplacement du socle 4 par rapport au plateau porte-aimant 5, mais aussi en n'importe quel emplacement entre ces positions extrêmes.

Il est également possible d'ajuster l'amplitude du déplacement (ou distance de déplacement), y compris pour obtenir une amplitude de déplacement nulle à partir d'une position d'équilibre entre les positions extrêmes.

Avec un seul bobinage, il n'est pas possible d'arrêter le déplacement du socle 4 entre deux positions (un seul bobinage procure du « tout ou rien »).

Pour ces raisons, un dispositif électromagnétique à un seul bobinage ne permet que des effets limités qui cantonne son application à la production d'effets de vibrations ou de chocs, à l'exclusion des effets plus élaborés tels que, par exemple, les effets de suspension, d'accélération et de décélération.

Un type d'effet de suspension correspond à un mouvement oscillant entre deux positions extrêmes non atteintes dont l'amplitude décroit dans le temps et dont l'oscillation s'effectue autour d'une position d'équilibre fixe. Un autre type d'effet de suspension correspond à un mouvement oscillant entre deux positions extrêmes non atteintes dont l'amplitude décroit dans le temps et dont l'oscillation s'effectue autour d'une position d'équilibre qui est mobile. Il y a d'autres types d'effet de suspension.

Un type d'effet d'accélération correspond à un mouvement linéaire (augmentation d'amplitude) dans un seul sens dont la force (ou intensité) augmente régulièrement dans le temps entre deux positions d'équilibre. Un autre type d'effet d'accélération correspond à un mouvement linéaire dans un sens dont la force et la vitesse augmentent entre deux positions d'équilibre. Il y a d'autres types d'effet de d'accélération.

Les effets élaborés (ou complexes) diffèrent les uns des autres et doivent pouvoir se succèdent les uns aux autres. Par exemple, un effet de choc est suivi par un effet de suspension ou un effet d'accélération est suivi par un effet de choc.

On comprend donc qu'il est préférable de mettre en oeuvre un dispositif électromagnétique à plusieurs bobinages car si la position extrême est déjà atteinte certains effets ne peuvent pas s'enchaîner à la suite d'un autre.

De plus, un dispositif électromagnétique à un seul bobinage ne procure pas de position neutre (tandis que deux bobinages générant des forces opposées peuvent maintenir le socle 4 en équilibre dans une position neutre entre les extrémités (ou positons extrêmes) de la course ou plage de déplacement du socle 4).

Par conséquent, avec deux bobinages (ou bobines) générant des forces opposées, il est possible de renforcer la force résultante des aimants qui tend déjà à ramener le socle 4 en position neutre lorsqu'aucun courant ne traverse les bobinages, pour maintenir le socle en position neutre (de sorte qu'il soit impossible pour l'utilisateur d'exercer des efforts suffisants pour violer une consigne d'immobilité dans cette position neutre). Avec deux bobinages, il est également possible de réassigner une position neutre au socle 4 qui soit distincte de la position neutre obtenue lorsqu'aucun courant ne traverse les bobines.

L'utilisation d'au moins deux bobinages permet un vrai contrôle bidirectionnel du déplacement en translation. Cela permet en particulier de doser l'intensité des effets et donc d'améliorer le réalisme de la simulation.

Par ailleurs, deux bobinages générant des forces dans la même direction permettent d'augmenter la puissance procurée par le dispositif électromagnétique pour certains cas extrêmes.

Les figures 9A et 9B illustrent le déplacement du socle 4 par rapport au plateau porte-aimant 5 selon l'axe x du repère (x, y, z).

Dans une variante, le socle 4 peut également se déplacer selon y et/ou z.

En d'autres termes, le socle 4 peut se déplacer par rapport au plateau porte-aimant 5 selon l'un ou plusieurs des axes x, y, z.

La position respective du corps de guidage 4 et du plateau porte-aimant 5 est centrée magnétiquement. Plus précisément, le ou les aimants du plateau porte-aimant 5 assurent le centrage du corps de guidage 4 par rapport au plateau porte-aimant 5 lorsque aucun courant ne parcoure le bobinage (ledit corps de guidage est alors en position neutre ou position de repos). Par conséquent, lorsque aucun signal électrique ne parcoure le bobinage, le ou les aimants exercent une force résultante qui déplace le corps de guidage 4 (et donc l'actionneur 2, la colonne de direction 31, et plus généralement toutes les pièces solidaires en translation du corps de guidage) jusqu'en position neutre.

Le bobinage consiste de préférence en deux bobines (comme décrit ci-après) placées de part et d'autres du plateau porte-aimant 5 et pouvant exercer chacune une force en sens contraire pour renforcer le centrage du corps de guidage 4 de sorte qu'il ne puisse pas se déplacer même sous l'action d'efforts exercés par l'utilisateur, étant entendu que les forces exercées par chaque bobine pour maintenir le corps de guidage 4 en position neutre ne sont pas nécessairement égales du fait notamment des efforts exercés par l'utilisateur.

Il n'y a besoin d'un signal électrique que pour contrôler le déplacement du corps de guidage 4, y compris pour le maintenir en position neutre malgré une force sensiblement longitudinale et importante exercée par le joueur sur l'actionneur 2 (et donc exercée indirectement sur la colonne de direction 31 et le corps de guidage 4).

En outre, l'axe de déplacement en translation de la colonne de direction 31 est fonction de l'inclinaison du socle 4, et donc de la platine 34. On pourra assembler ces pièces de façon à ce que cet axe de déplacement corresponde à l'axe A de rotation de la colonne de direction, ou soit parallèle à cet axe A, ou soit décalé par rapport à cet axe A.

Dans un autre mode de réalisation, il est possible d'assembler ces pièces de façon à obtenir une translation de la colonne de direction et donc de l'actionneur 2 dans une direction oblique (c'est-à-dire inclinée par rapport à l'horizontale) et distincte de l'inclinaison ou non de la colonne de direction.

L'angle d'inclinaison du socle 4 peut dépendre d'abord de la direction de l'axe A (c'est-à-dire de son inclinaison par rapport à l'horizontale) et des effets que l'on souhaite privilégier. Ensuite, il est possible de renvoyer une force exercée par la translation du socle 4 dans une direction différente de celle du déplacement du socle 4 (même si, dans ce mode de réalisation, l'optimum est une direction parallèle à l'axe A). On pourrait, par exemple, décaler d'un angle de trente degrés ou plus.

Le système de retour de force utilisé pour dynamiser la colonne de direction au moins en translation peut comprendre un ou plusieurs moteurs électriques linéaires. On peut placer les moteurs électriques linéaires de différentes façons, selon les besoins. Par exemple, si on souhaite renforcer l'effet de suspension, on peut placer un moteur électrique linéaire pour soulever/abaisser la colonne de direction. Si on souhaite réaliser des effets de retour de force latéraux, on peut placer un moteur électrique linéaire pour pousser/tirer la colonne de direction vers la gauche ou la droite par rapport au joueur.

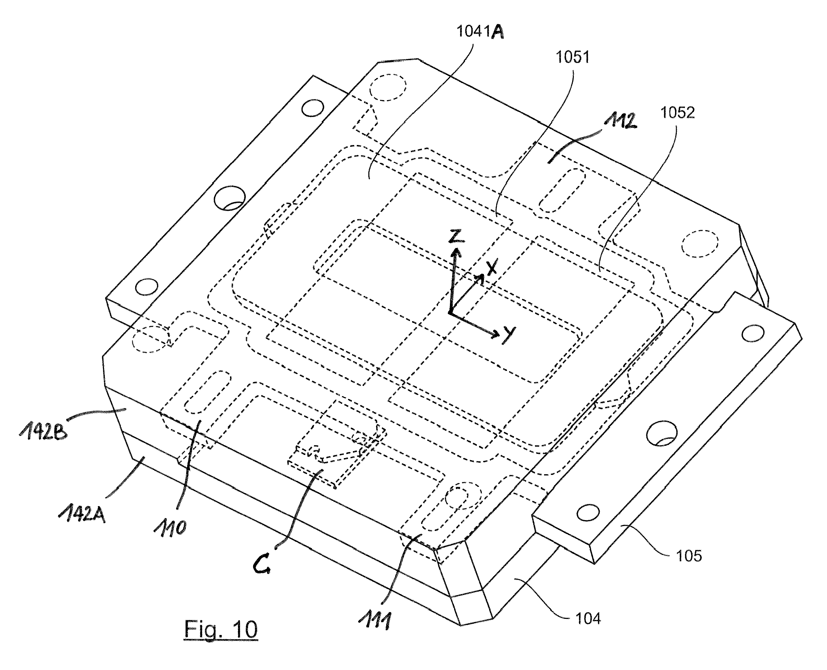

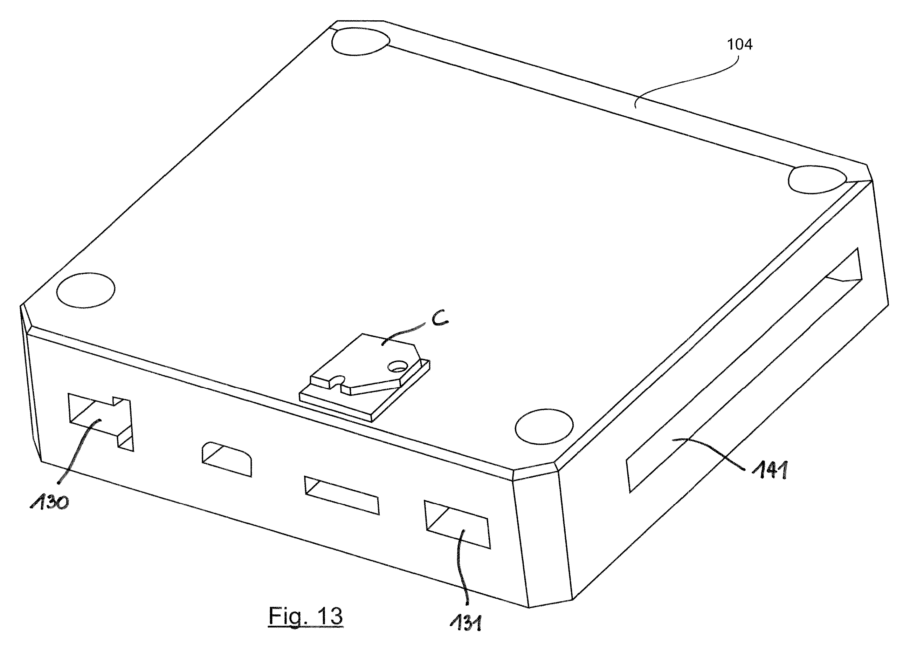

Le système de retour de force utilisé pour dynamiser la colonne de direction au moins en translation peut comprendre au moins un capteur de déplacement. En particulier, un capteur de déplacement C peut être porté par le corps de guidage 4 et est représenté sur les figures 10 et 13.

Le capteur de déplacement C est, dans ce mode de réalisation, un capteur magnétique linéaire qui effectue une mesure différentielle des variations de champs magnétiques pour acquérir les données correspondant au déplacement du corps de guidage 4 par rapport à au moins un aimant porté par le plateau de guidage 5. Un tel capteur offre une mesure très précise.

Un microprocesseur (non représenté) contrôle ledit signal électrique et commande ainsi le sens, la distance et la vitesse dudit déplacement. Ledit capteur magnétique est relié audit microprocesseur qui traite les données qu'il reçoit dudit capteur. Ledit microprocesseur ajuste en temps réel ledit signal électrique en fonction des données reçues dudit capteur.

La figure 10 est une vue en transparence du socle ou corps de guidage 104 et du plateau porte-aimant 105 selon un autre mode de réalisation. On distingue les deux aimants 1051, 1052 disposés sur le plateau 105 et la bobine 1041A du corps de guidage 104.

Les deux aimants 1051, 1052 ont chacun une forme rectangulaire et ils sont disposés de façon symétrique par rapport à l'axe longitudinal (direction de l'axe y) et à l'axe transversal (direction de l'axe x) du plateau porte aimant. Chaque aimant peut être remplacé par deux aimants (ou plus) pour faciliter leur mise en place sur le plateau porte aimant. De préférence, le nombre total d'aimants est un multiple de deux et lesdits aimants sont des aimants au néodyme.

En position neutre, le plateau de guidage 105 s'étend de façon médiane dans un plan (x, y) si on considère que l'intersection des directions x, y et z se trouve au milieu du plateau (le centre du plateau correspondant aux coordonnées x=0, y=0 et z=0).

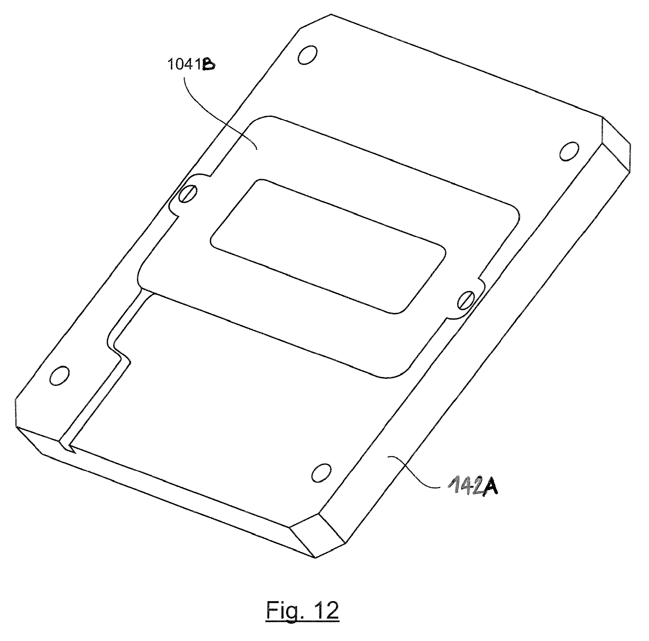

Le plateau porte-aimant 105 est placé entre la bobine 1041A qui est au-dessus de lui et la bobine 1041B (représentée sur la figure 12) qui est en dessous de lui. Les bobines 1041A et 1041B sont donc disposées de façon symétrique par rapport au plateau porte-aimant 105.

Les bobines 1041A et 1041B présentent chacune une forme aplatie identique (les bobines sont donc de préférence planes) et elles s'étendent selon la direction y (orthogonale par rapport à la direction x).

Le centre des bobines 1041 A et 1041 B est sensiblement aligné avec le centre du plateau lorsque aucun signal électrique ne parcoure le bobinage (c'est-à-dire dans la position neutre correspondant à l'absence de tout signal électrique).

On distingue également le capteur de déplacement C disposé sur le corps de guidage 4.

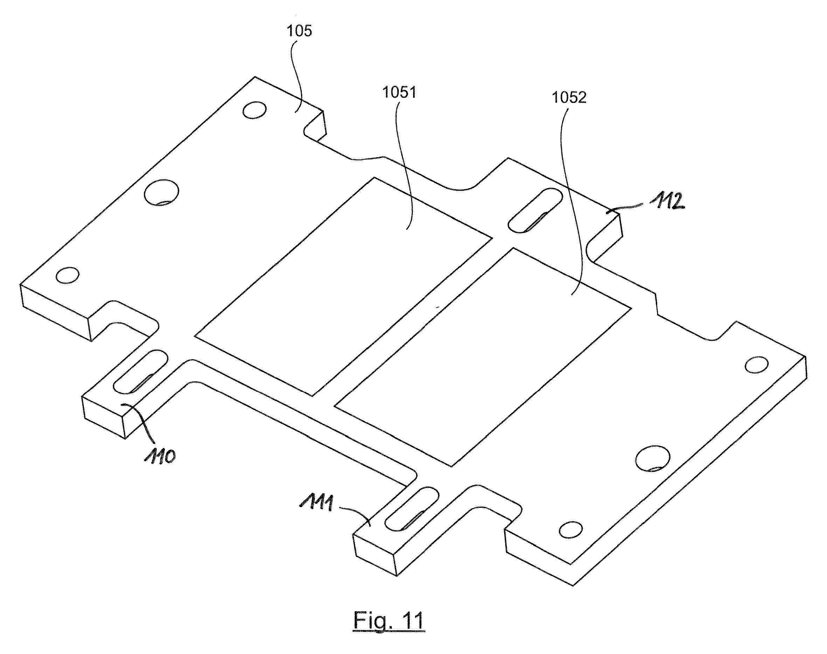

La figure 11 est une vue en perspective du plateau 105 de la figure 10 montrant les aimants 1051, 1052. La forme du plateau porte aimant, plateau 105 dans ce mode de réalisation est optimisée pour un meilleur guidage, une plus grande robustesse (utile notamment quand les pièces de coulissement travaillent en porte à faux). Le plateau 105 comporte en effet trois prolongements 110, 111, 112 comportant chacun une lumière oblongue destinée à coopérer avec un plot formé dans le corps de guidage 104 (les plots traversent les lumières oblongues, ils sont formés de deux parties mâle et femelle qui s'emboîtent quand on assemble la partie supérieure 142B du socle 104 et la partie inférieure 142A du socle 104 de la figure 13.

Dans cet exemple, deux premiers prolongements 110 et 111 s'étendent transversalement (c'est-à-dire qu'ils s'étendent selon la direction de déplacement x des pièces de coulissement) d'un côté de la portion pénétrante du plateau 105 et un troisième prolongement 112 s'étend transversalement (direction de l'axe X) de l'autre côté du plateau. Les deux premiers prolongements sont espacés et le troisième est quant à lui large au regard des deux premiers prolongements. Chacun des prolongements coulisse dans une ouverture correspondante aménagée dans le corps de guidage 104 (ces ouvertures ne sont pas représentées sur la figure 10 par souci de clarté, seules les ouvertures 130 et 131 étant représentées sur la figure 13).

La figure 12 est une vue en perspective d'une partie inférieure 142A du corps de guidage 104 de la figure 10 montrant la bobine « inférieure » 1041B.

La figure 13 est une vue en perspective du corps de guidage 104 de la figure 10 sans le plateau porte-aimant 105. On distingue également le capteur de déplacement C ainsi que l'ouverture 141 (l'ouverture correspondante étant non représentée sur la partie opposée du socle 104), et les ouvertures 130 et 131 permettant un guidage optimisé du déplacement du socle 104 (sans nuire à la compacité du socle 104 ni compliquer son montage dans le contrôleur de jeu vidéo).

Il est à noter que les prolongements 110, 111, 112 du plateau 105 se déplacent dans leurs ouvertures respectives du socle 104 sans nécessairement déboucher de celles-ci (notamment en positions extrêmes du socle).

### 6.3 Variantes

Dans une variante du mode de réalisation décrit ci-dessus, le corps de guidage 4 peut être solidaire du bâti fixe 3 et le plateau de guidage 5 peut être solidaire de l'actionneur 2.

Dans un autre mode de réalisation, la colonne de direction 31 (et l'axe A) peut être sensiblement horizontale.

Dans le mode de réalisation des figures 2 à 5, le corps de guidage 4 est à plat sur la platine 34. Dans un autre mode de réalisation, le corps de guidage 4 est sur sa tranche (autrement dit, par rapport aux figures 3 à 5, le corps de guidage 4 (et le plateau porte-aimant 5) est pivoté sur lui-même de quatre-vingt dix degrés autour d'un axe sensiblement parallèle à l'axe A).

Dans le mode de réalisation des figures 2 à 5, la paire de pièces de coulissement 4 et 5 est placée de façon que la direction de translation de l'une de ces pièces (la pièce mobile coulissante) soit sensiblement parallèle à l'axe A (pour simuler notamment des accélérations ou décélérations du véhicule simulé dans une direction sensiblement horizontale par rapport au véhicule simulé ou des chocs au moins partiellement frontaux ou arrières).

Dans un autre mode de réalisation de l'invention, la direction de translation de la colonne de direction par rapport au bâti est plus fortement inclinée par rapport à l'horizontale (cette direction de translation peut être différente de la direction de l'axe A, elle peut en particulier être plus inclinée pour accentuer l'effet de suspension). De préférence, la paire de pièces de coulissement 4 et 5 est placée de façon que la direction de translation de l'une de ces pièces (la pièce mobile coulissante) soit sensiblement parallèle à la direction de translation de la colonne de direction, donc inclinée par rapport à l'horizontale. Dans ce mode de réalisation, on obtient une translation de la colonne de direction et donc de l'actionneur 2 dans une direction oblique (c'est-à-dire inclinée par rapport à l'horizontale) et distincte de l'inclinaison ou non de la colonne de direction. Cette direction oblique permet de simuler des effets au moins partiellement horizontaux, notamment des accélérations ou décélérations du véhicule simulé dans une direction sensiblement horizontale par rapport au véhicule simulé ou des chocs au moins partiellement frontaux ou arrières, mais aussi des effets au moins partiellement verticaux, notamment un effet de suspension.

Dans un autre mode de réalisation de l'invention, les pièces de coulissement 4 et 5 sont supprimées et elles sont remplacées par une paire de pièces de coulissement identiques (dans leur fonctionnement, mais pas nécessairement dans leurs dimensions, caractéristiques d'aimant et de bobinage) aux pièces 4 et 5 mais elles sont placées de façon à ce que la direction de translation de la pièce mobile coulissante de remplacement soit sensiblement perpendiculaire à l'axe A (c'est-à-dire une translation sensiblement verticale par rapport à l'utilisateur pour simuler notamment un effet de suspension ou des accélérations ou des décélérations du véhicule simulé dans une direction sensiblement verticale par rapport au véhicule simulé ou des chocs sur ou sous le véhicule simulé). Dans ce cas, la colonne de direction 31 (et donc l'actionneur 2) se soulève ou s'abaisse par translation ou par rotation de ladite colonne par rapport au bâti 3, en fonction du signal électrique qui parcoure le ou les bobinages de la paire de pièces de coulissement.

Dans le cas d'une translation de la colonne de direction par rapport au bâti 3 selon une direction sensiblement perpendiculaire à celle de l'axe A, l'ensemble constitué de la colonne de direction 31 et de l'actionneur 2 (plus, le cas échéant, le système d'effet de couple et de vibration(s)) est en liaison glissière verticale par rapport au bâti 3.

Dans le cas d'une rotation de la colonne de direction par rapport au bâti autour d'un axe (axe sensiblement transversal) sensiblement perpendiculaire à l'axe A, la première extrémité de la colonne, par exemple, l'extrémité opposée à l'utilisateur, est en liaison rotule par rapport au bâti 3 et la seconde extrémité est en liaison glissière verticale par rapport au bâti, et un moteur électrique linéaire lève/abaisse cette seconde extrémité (cela peut être inversé : le moteur électrique linéaire peut lever/abaisser l'extrémité opposée à l'utilisateur). Cette variante présente l'avantage de faire travailler les pièces de coulissement sans porte à faux.

Dans un autre mode de réalisation de l'invention, la colonne de direction peut être horizontale en position neutre (position au repos) et des paires de pièces de coulissement identiques (dans leur fonctionnement, mais pas nécessairement dans leurs dimensions, caractéristiques d'aimant et de bobinage) à la paire de pièces 4 et 5 sont ajoutées et sont placées de façon à ce que les directions de translation de paires de pièces de coulissement ajoutées soient sensiblement orthogonales à l'axe A et perpendiculaire entre elles.

La colonne de direction peut alors avancer/reculer, se soulever/s'abaisser, se déplacer ou pivoter de gauche à droite et inversement (pour simuler notamment des mouvements d'accélération ou de décélération du véhicule simulé dans n'importe quelle direction par rapport au véhicule simulé ou des chocs appliqués au véhicule simulé de face, par l'arrière, de dessous, de dessus, de droite ou de gauche). Dans ce cas, la colonne de direction 31 (et donc l'actionneur 2) peut être montée suspendue par des ressorts par rapport au bâti 3.

Dans un autre mode de réalisation, les pièces de coulissement 4 et 5 peuvent être placées sensiblement à l'horizontale. Il n'y alors plus de platine 34.

Dans un autre mode de réalisation, le capteur de déplacement est un ensemble de détection à effet Hall mesurant le déplacement de la colonne de direction 31 par rapport au bâti 3. Dans ce cas, on place un aimant sur la colonne de direction, et l'on prévoit un ou plusieurs capteurs magnétiques sur le bâti 3 (ou sur une pièce fixe par rapport au déplacement de la colonne de direction que l'on souhaite mesurer). Le ou les capteurs relèvent les variations du champ magnétique, et l'on en déduit la position de l'aimant, et donc les données relatives au déplacement de la colonne de direction par rapport au bâti 3 (ou à par rapport à ladite pièce fixe).

Dans un autre mode de réalisation, le capteur de déplacement n'est pas un capteur magnétique mais un potentiomètre linéaire (une résistance linéaire variable). Le déplacement du corps de guidage 4 par rapport au plateau porte-aimant 5 provoque une variation de la résistance et l'on déduit de cette variation les données relatives au déplacement du corps de guidage. Ledit potentiomètre linéaire peut par exemple coopérer avec la paire de pièces de coulissement ; plus précisément, le curseur dudit potentiomètre peut être solidaire de l'une des pièces de coulissement tandis que le bâti dudit potentiomètre peut être solidaire de l'autre pièce de coulissement.

Dans une autre variante, le potentiomètre peut coopérer avec la pièce de coulissement solidaire de la colonne de direction et le bâti 3.

Dans un autre mode de réalisation, il n'y a pas de capteur de déplacement.

Dans un mode de réalisation particulier, il est possible de prévoir au moins un capteur de contraintes pour mesurer les efforts s'exerçant sur l'actionneur 2 (ou sur la colonne de direction ou l'une des pièces de coulissement). Chaque capteur de contrainte est relié audit microprocesseur.

Lorsque les contraintes s'exerçant sur l' actionneur 2 (ou sur la colonne de direction ou l'une des pièces de coulissement) dépassent un seuil prédéterminé, le microprocesseur ajuste le signal électrique de sorte que les contraintes mesurées demeurent inférieures audit seuil ou le microprocesseur commande l'arrêt de tout signal électrique dans le ou les bobinages (et/ou dans le moteur électrique rotatif 41) pour que le système d'effet de retour de force et de vibration(s) et/ou le système d'effets de couple et de vibration(s) cesse de s'opposer aux efforts du joueur.

L'actionneur 2 peut comprendre un connecteur sur lequel peut venir se connecter un câble, pour l'alimentation en énergie électrique et/ou la transmission de données (par exemple, des informations sur la rotation de l'actionneur 2, et le cas échéant des informations complémentaires, telles qu'une commande de changement de vitesse, lorsque l'utilisateur agit sur les palettes 25, ou encore d'autres commandes déclenchées par l'activation des boutons 26 (visibles sur la figure 1) situés sur l'actionneur 2.

Dans un autre mode de réalisation, le ou les aimants solidaires de l'une des pièces de coulissement sont remplacés par une bobine produisant un champ magnétique.

Dans un autre mode de réalisation, le système d'effets de couple et de vibration est remplacé par un moteur électrique rotatif triphasé sans balai (en Anglais, « brushless ») dont l'arbre (rotor) constitue -en tout ou en partie- la colonne de direction du volant ou est solidaire en rotation de la colonne de direction du volant. Au moins un aimant est solidaire de l'arbre de ce moteur. Un capteur à effet Hall peut être utilisé pour mesurer la rotation de cet aimant. Ce moteur électrique rotatif triphasé sans balai n'agit pas sur l'actionneur par l'intermédiaire de moyens de transmission (engrenages, poulies, roues dentées, courroies et chaînes).

Autrement dit, ce moteur électrique rotatif est en liaison directe avec la colonne de direction (le moteur électrique rotatif peut faire partie de cette colonne de direction) et il agit sur l'actionneur 2 (par le biais de la colonne de direction et, selon le cas, via une pièce de liaison qui rend l'actionneur détachable du bâti 3). Si l'actionneur comporte des boutons et des voyants (ou plus généralement des éléments fonctionnant à l'électricité), l'arbre dudit moteur sans balai est de préférence creux ou comporte une rainure longitudinale afin d'offrir un passage à des fils électriques pour la transmission de données et l'alimentation électrique de ces boutons et voyants.

Dans une variante à ce mode de réalisation, la transmission des données peut être effectuée sans fil par induction magnétique. Dans ce cas, une boucle à induction magnétique est placée au sein du bâti 3 et une bobine réceptrice est placée dans l'actionneur 2. Les données sont converties en signal électrique envoyé dans cette boucle à induction magnétique. Le courant circulant dans cette boucle crée donc un champ magnétique qui est modulé par les données transmises. La bobine réceptrice (ou bobine antenne), placée dans ce champ magnétique sert de capteur et reproduit le signal initial qui peut alors être converti en données (si nécessaire le signal reçu est préalablement amplifié). Si l'actionneur 2 comporte des boutons et des voyants, l'induction magnétique peut en outre être utilisée pour leur alimentation électrique.

Dans un autre mode de réalisation, la transmission des données peut être effectuée sans fil, par un émetteur à radio fréquence (par exemple, 2,4 GHz) placé dans l'actionneur 2 (ou dans le bâti 3).

Il est possible de prévoir, dans un mode de réalisation particulier, que l'actionneur puisse faire un grand nombre de tours, voire de ne pas être limité en nombre de tours. Cela présente un intérêt notamment lorsque l'on souhaite simuler l'exécution de manoeuvres (par exemple, faire faire un demi-tour à la voiture simulée).

En outre, l'utilisateur peut facilement changer un actionneur du type volant pour mettre en place un actionneur de type guidon si le jeu vidéo auquel il joue simule une moto, à la place d'un volant préalablement monté. Il est également possible de prévoir une déclinaison de volant, selon le type de véhicule simulé. Pour les voitures, les déclinaisons de volant peuvent notamment être : formule 1, grand tourisme, rallye, tout-terrain, kart, etc. Pour les trains, les déclinaisons peuvent être : Micheline, T.G.V., ... Pour les motocyclettes, les déclinaisons de guidon peuvent être : moto non préparée, moto de course, moto de cross, moto de rallye, scooter, etc. Pour les vélos, les déclinaisons de guidon peuvent être : vélo de course, V.T.C., V.T.T., vélo de ville, etc. Pour les bateaux, les déclinaisons de roue peuvent être : barre à roue en bois de Galions, barre à roue de voilier moderne, volant, etc. Les actionneurs peuvent donc avoir des formes différentes, des diamètres différents, des boutons différents de sorte que leur ergonomie soit adaptée au type de véhicule simulé. Ils peuvent également comporter, des moteurs de vibrations différents, ils peuvent être filaires ou sans fil (pour la transmission de données), etc.

Il est aussi possible de prévoir, dans un mode de réalisation particulier, que le nombre de tours que l'actionneur 2 peut faire par rapport au bâti 3 diffère suivant le type d'actionneur utilisé.

Dans un mode de réalisation particulier, pour les simulations de vol, en particulier pour les manches d'avion (« yokes » en anglais) qui ont un débattement relativement long, il est possible de prévoir une course de déplacement relativement longue entre une position neutre et une position de déplacement maximale d'une première desdites pièces de coulissement par rapport à une seconde desdites pièces de coulissement.

La forme des ouvertures n'est pas limitée à celles décrites précédemment.

## Revendications

1. Contrôleur de jeu vidéo (1) présentant un actionneur (2) mobile en rotation par rapport à un bâti (3), de façon à simuler au moins un contrôle de la rotation d'une colonne de direction d'un véhicule simulé,
**caractérisé en ce que** ledit actionneur (2) est monté mobile en translation par rapport audit bâti fixe (3), sur une plage de déplacement prédéterminée entre deux positions extrêmes, à l'aide d'un assemblage d'au moins deux pièces de coulissement (4, 5) coulissant l'une par rapport à l'autre ou les unes par rapport aux autres, une desdites pièces de coulissement (4, 5) étant solidaire dudit actionneur (2) et l'autre desdites pièces de coulissement (4, 5) étant solidaire dudit bâti fixe (3),
une première desdites pièces de coulissement (4) comprenant au moins une fente (F) accessible par au moins une ouverture (41) dans laquelle peut se déplacer, selon au moins un axe distinct de l'axe de déplacement en rotation dudit actionneur (2), au moins une portion pénétrante (51) de la seconde desdites pièces de coulissement (5),
le déplacement en translation dudit actionneur (2) étant généré par des moyens électromagnétiques commandés par au moins un signal électrique dont les caractéristiques sont fonction d'une commande reçue, la première desdites pièces de coulissement comprenant au moins un bobinage parcouru par ledit signal électrique ou au moins un aimant et la seconde desdites pièces de coulissement comprenant au moins un aimant ou au moins un bobinage respectivement.

2. Contrôleur de jeu vidéo (1) selon la revendication 1, **caractérisé en ce qu'**une desdites pièces de coulissement (4) comprend au moins deux bobinages (1041A, 1041B).

3. Contrôleur de jeu vidéo (1) selon l'une quelconque des revendications 1 à 2, **caractérisé en ce que** ladite fente (F) est accessible par au moins deux ouvertures (41).

4. Contrôleur de jeu vidéo (1) selon l'une quelconque des revendications 1 à 3, **caractérisé en ce que** le déplacement en translation dudit actionneur (2) est effectué suivant un axe distinct de l'axe de rotation (A) dudit actionneur (2).

5. Contrôleur de jeu vidéo (1) selon l'une quelconque des revendications 1 à 4, **caractérisé en ce que** ledit actionneur (2) est monté mobile en translation par rapport audit bâti (3) selon au moins deux directions.

6. Contrôleur de jeu vidéo (1) l'une quelconque des revendications 1 à 5, **caractérisé en ce qu'**une desdites pièces de coulissement comprend au moins unaimant disposé symétriquement par rapport à l'axe longitudinal (y) et à l'axe transversal (x) de ladite pièce de coulissement.

7. Contrôleur de jeu vidéo (1) selon l'une quelconque des revendications 1 à 6, **caractérisé en ce qu'**il comprend des moyens de déplacement en rotation dudit actionneur (2) par rapport audit bâti (3) de façon à simuler/ restituer au moins un effet de couple ou un effet de vibration(s).

8. Contrôleur de jeu vidéo (1) selon l'une quelconque des revendications 1 à 7, **caractérisé en ce que** ledit actionneur (2) est détachable dudit bâti (3).

9. Contrôleur de jeu vidéo (1) selon l'une quelconque des revendications 1 à 8, **caractérisé en ce que** ledit actionneur (2) appartient au groupe comprenant :
- les volants ;
- les guidons ;
- les barres à roue de bateau ;
- manches d'avion (en anglais « yokes »).

10. Contrôleur de jeu vidéo (1) selon l'une quelconque des revendications 1 à 9, **caractérisé en ce que** ledit contrôleur (1) comprend un capteur de déplacement (C) pour mesurer ledit déplacement en translation réel et fournir les données représentatives de ce déplacement à des moyens de traitement.

11. Contrôleur de jeu vidéo (1) selon l'une quelconque des revendications 1 à 10, **caractérisé en ce que** ledit contrôleur comprend au moins un capteur de contrainte pour mesurer les efforts s'exerçant sur ledit actionneur (2) ou sur ladite colonne de direction (31).

12. Contrôleur de jeu vidéo (1) selon l'une quelconque des revendications 3 à 11, **caractérisé en ce que** ladite seconde pièce de coulissement (5) comprend une partie pénétrante (51) dont la largeur est inférieure à la longueur desdites ouvertures (41) de ladite première pièce de coulissement (4) et deux parties (52) situées aux extrémités respectives de la partie (51) dont la largeur est supérieure à la longueur desdites ouvertures (41).

13. Contrôleur de jeu vidéo (1) selon l'une quelconque des revendications 3 à 12, **caractérisé en ce que** ladite seconde pièce de coulissement (5) comprend au moins un prolongement (110, 111, 112) selon une direction perpendiculaire à l'axe longitudinal de la partie pénétrante (51).

14. Contrôleur de jeu vidéo (1) selon la revendication 13, **caractérisé en ce que** ledit au moins un prolongement (110, 111, 112) est mobile par rapport à une ouverture correspondante ménagée dans ladite première pièce de coulissement (4).

15. Contrôleur de jeu vidéo (1) selon l'une quelconque des revendications 1 à 14, **caractérisé en ce que** la première desdites pièces de coulissement comprend deux sous-ensembles (42A, 42B) assemblés l'un à l'autre.

16. Contrôleur de jeu vidéo (1) selon la revendication 15, **caractérisé en ce que** chacun desdits sous-ensembles (42A, 42B) comprend au moins un bobinage (1041A, 1041B).
